# NOUVEAU FASCICULE DE BREVET EUROPEEN

(11) **EP 3 944 890 B2**
(45) Date de publication et mention de la décision concernant l'opposition: **05.08.2026**
(45) Mention de la délivrance du brevet: 06.09.2023
(21) Numéro de dépôt: 21185748.7
(22) Date de dépôt: 15.07.2021
(51) Int. Cl.: B01D 53/62, B01D 53/75, B01D 53/78, B01D 53/14, B01D 53/40, B01D 53/77, B01D 53/76

(54) **PROCÉDÉ ET SYSTÈME DE PRÉTRAITEMENT D'EFFLUENT GAZEUX POUR LE CAPTAGE DE CO2 EN POST COMBUSTION**
VERFAHREN UND SYSTEM ZUR VORBEHANDLUNG VON ABGAS FÜR DIE CO2-ABSCHEIDUNG IN DER NACHVERBRENNUNG
METHOD AND SYSTEM FOR PRETREATMENT OF GASEOUS EFFLUENT FOR CAPTURING POST-COMBUSTION CO2

(30) Priorité: 29.07.2020 FR 2008002
(43) Date de publication de la demande: 02.02.2022
(73) Titulaire: IFP Energies nouvelles, 92500 Rueil-Malmaison (FR)
(72) Inventeur: GUILLOU, Florent, 92852 RUEIL-MALMAISON CEDEX (FR); MOROY, Berenice, 92852 RUEIL-MALMAISON CEDEX (FR); SANTOS-MOREAU, Vania, 92852 RUEIL-MALMAISON CEDEX (FR)
(74) Mandataire: Plasseraud IP

(56) Documents cités:
- EP-A1- 2 246 532
- EP-A1- 3 744 417
- EP-A1- 3 786 421
- WO-A1-2018/074443
- WO-A1-2019/131747
- WO-A1-2019/208416
- FR-A1- 2 948 578
- FR-A1- 2 983 863
- FR-A1- 2 983 863
- JP-A- 2005 083 642
- US-A1- 2007 006 565
- US-A1- 2009 277 363
- US-A1- 2011 232 286
- US-A1- 2012 192 564
- US-A1- 2021 299 609

## Description

### Domaine technique

La présente invention concerne le domaine du captage du CO₂ provenant d'un effluent gazeux. Le procédé de captage, du CO₂ pouvant être inclus dans une méthode du type CSC (du terme anglophone CCS - pour Carbon Capture and Storage) consiste à piéger les molécules de CO₂ avant, pendant ou après l'étape de combustion industrielle afin d'éviter sa libération dans l'atmosphère et contrôler ainsi l'émission des gaz à effet de serre. Trois familles de procédés de captage sont ainsi envisagées :
- précombustion : concerne la captage avant la combustion industrielle,
- postcombustion : concerne la captage après la combustion industrielle classique (à l'air), avec peu ou pas de modification du procédé de combustion,
- oxycombustion : concerne la captage après une combustion à l'oxygène pur.

La présente invention concerne le captage en postcombustion.

Parmi les solutions pour réduire les émissions de CO₂, des technologies de Captage et Stockage du CO₂ (CSC) sont en train d'être développées, pouvant être utilisées par des émetteurs industriels. Ces technologies CSC sont essentielles pour pouvoir atteindre les objectifs fixés lors de la Conférence sur le Climat de Paris de décembre 2015 (COP21). Ces technologies devront contribuer pour 12% aux réductions des émissions de CO2 en 2050 si l'on veut limiter le réchauffement climatique à 2°C d'ici 2100. En réponse au besoin de captage de CO₂ en postcombustion, différentes technologies performantes sont en cours de développement. Actuellement, les technologies les plus prometteuses pour le captage de CO₂ dans des fumées et des gaz industriels sont les technologies d'absorption en utilisant des solvants. La plupart des solvants utilisés peuvent se dégrader en présence d'oxygène. Pour une utilisation optimale du procédé, la concentration en oxygène dans les fumées ou gaz industriels doit être minimisée.

Dans le cadre de la prospective sur la thématique CO₂, le cas d'application en cimenteries, sites métallurgiques, et sites industriels analogues, par exemple la production de chaux, montre un intérêt, en particulier pour les problématiques suivantes:
- le procédé de production d'une cimenterie produit des quantités importantes de CO₂,
- l'énergie à mettre en oeuvre pour le captage du CO₂ est très importante, équivalente à celle mise en oeuvre pour faire fonctionner le procédé de production,
- les fumées de combustion sont riches en CO₂
- les fumées sont riches en oxygène O₂.

Dans le cas de l'utilisation de procédés de captage de CO₂ par absorption en utilisant des solvants, ce dernier point est critique car il peut impacter la dégradation du solvant et donc les coûts opératoires du procédé puisqu'il faut remplacer le volume de solvant plus souvent. En effet, la désacidification des effluents gazeux, tels que par exemple le gaz naturel et les fumées de combustion, est généralement réalisée par lavage par une solution absorbante. La solution absorbante permet d'absorber les composés acides présents dans l'effluent gazeux (H₂S, mercaptans, CO₂, COS, SO₂, CS₂).

Toutefois, il est bien connu de l'homme de l'art que les amines pouvant être utilisées en tant que solvant présentent l'inconvénient de se dégrader dans les conditions de mise en oeuvre. En particulier, les amines peuvent être dégradées par l'oxygène engendrant une consommation de l'amine et la formation de produits de dégradation qui s'accumulent dans l'unité ou, pour les plus volatils, qui sont entrainés dans les effluents gazeux du procédé. Ainsi, en particulier dans le cas du traitement de fumées en postcombustion, dans un procédé utilisant une solution aqueuse de monoethanolamine (MEA), des quantités importantes d'ammoniac peuvent se former. L'ammoniac ainsi formé est entrainé dans l'atmosphère avec les fumées traitées ce qui pose des problèmes quant à la protection de l'environnement.

Une autre problématique considérée dans le cadre du procédé de captage du CO₂, et en particulier les procédés de captage en postcombustion par absorption, est la nécessité de produire de la vapeur de basse ou moyenne pression pour la phase de régénération du solvant. Le coût du CO₂ capté va dépendre fortement de la quantité vapeur nécessaire et du coût de cette vapeur. Dans des sites où la récupération de vapeur à titre résiduel en provenance du processus industriel n'est pas possible ou insuffisante pour alimenter les besoins du procédé, le coût du CO₂ va augmenter significativement.

### Technique antérieure

L'art antérieur pertinent consiste en des procédés d'absorption CO₂ en postcombustion pour le captage de CO₂. Trois procédés sont particulièrement intéressants : Hicapt^{™} Hicapt+ ^{™} et DMX^{™} (IFP Energies nouvelles, France). Le procédé HiCapt+ ^{™} comporte des additifs pour lutter contre la dégradation du solvant par l'oxygène.

FR2948578 dévoile un procédé Hicapt+ ^{™} comprenant une solution absorbante contenant un inhibiteur de dégradation dérivé d'un triazole ou d'un tetrazole, et un procédé d'absorption de composés acides contenus dans un effluent gazeux.

EP2228119A1 dévoile un procédé Hicapt+ ^{™} mettant en oeuvre la désacidification d'un gaz par une solution absorbante avec section de lavage à l'eau optimisée.

EP1656983A1 dévoile un procédé DMX ^{™}, qui propose la désacidification d'un gaz avec une solution absorbante à régénération fractionnée.

De plus, le taux d'oxygène résiduel présent dans les fumées de combustion industrielle périclite la durée de vie, en accélérant la dégradation du solvant, ce qui impacte donc les coûts opératoires du procédé puisqu'il faut remplacer le solvant plus souvent.

US 2007/006565 A1 concerne également un procédé de séparation de gaz acide d'un effluent.

### Résumé de l'invention

La présente invention propose un procédé pour réduire la dégradation d'une solution absorbante mise en oeuvre pour absorber les composés acides contenus dans un effluent gazeux, la solution absorbante comportant des amines en solution aqueuse. Pour cela, l'invention vise à réduire le taux d'oxygène contenu dans les fumées traitées.

La présente invention concerne un procédé de désoxydation de fumées ou gaz industriels avant captage du CO₂ en produisant de la vapeur. Cette invention permet de a) réduire la concentration en O₂ dans les fumées et, optionnellement, b) produire de la vapeur qui est utilisée dans la phase de régénération du solvant pour limiter l'apport d'énergie pour la phase de régénération du solvant.

Dans la présente invention, on se propose à éliminer l'oxygène dans les fumées en brûlant un combustible ayant comme comburant les fumées riches en oxygène. La quantité d'oxygène, donc de comburant, disponible dans les fumées est suffisante pour fournir l'énergie de régénération nécessaire (d'un tiers à la totalité selon la teneur en O₂ dans les fumées), d'où l'intérêt d'exploiter cette synergie intéressante.

L'invention consiste dans un procédé de séparation d'au moins un gaz acide contenu dans un effluent gazeux d'entrée contenant au moins les étapes suivantes :
- On met en contact, dans une unité de séparation, un effluent gazeux froid et riche en composés acides avec une solution absorbante pauvre en composés acides de manière à obtenir un effluent gazeux pauvre en composés acides et une solution absorbante riche en composés acides,
- On régénère au moins une fraction de la solution absorbante riche en composés acides dans une colonne de régénération de manière à obtenir une solution absorbante pauvre en composés acides et un effluent riche en composés acides, ladite solution absorbante pauvre en composés acides étant utilisée dans l'étape de mise en contact avec ledit effluent froid et riche en composés acides,
- le procédé de séparation comporte en outre les étapes suivantes de désoxydation de l'effluent gazeux d'entrée :
- On réalise une combustion, dans un dispositif de combustion, de l'effluent gazeux d'entrée avec un combustible, de manière à obtenir un effluent gazeux chaud et riche en composés acides,
- On refroidit l'effluent gazeux chaud et riche en composés acides dans un échangeur et on obtient l'effluent froid et riche en composés acides utilisé dans l'étape de mise en contact avec une solution absorbante pauvre en composés acides.

Selon un mode de réalisation, on peut contrôler la qualité de l'effluent chaud et riche composés acides avec l'ajout, dans le dispositif de combustion, d'un moins un comburant d'appoint.

Selon l'invention, on introduit dans l'échangeur un fluide sous forme liquide haute pression pour refroidir l'effluent gazeux chaud et riche en composés acides dont on retire un fluide sous forme vapeur haute pression, et on utilise ledit fluide sous forme de vapeur haute pression comme source d'énergie pour faire fonctionner la colonne de régénération.

Selon un mode de réalisation, on peut contrôler la qualité du fonctionnement de la colonne de régénération avec l'ajout d'un fluide complémentaire sous forme vapeur haute pression d'appoint.

Selon l'invention, on introduit une étape qui consiste à réchauffer l'effluent gazeux d'entrée avant de l'introduire, sous forme d'effluent d'entrée chaud dans le dispositif de combustion.

Selon l'invention on réchauffer l'effluent gazeux d'entrée en l'introduisant dans un échangeur dont on le ressort sous forme d'effluent gazeux d'entrée chaud.

Selon un mode de réalisation, on peut utiliser l'effluent gazeux chaud et riche en composés acides en sortie du dispositif de combustion pour réchauffer l'effluent gazeux d'entrée.

Selon un mode de réalisation, l'effluent gazeux d'entrée peut être une fumée résultante d'une combustion préalable, notamment issue d'un procédé industriel.

Selon un mode de réalisation, l'effluent riche en composés acides peut être stocké dans le sous-sol, en particulier dans des champs pétroliers ou de gaz épuisés ou déplétés ou dans des aquifères salins profonds, ou utilisé pour produire des molécules d'intérêt, par exemple des molécules plateformes pour la chimie.

Selon un mode de réalisation, le combustible peut être un rebus de déchets ou de la biomasse.

Selon un mode de réalisation, le dit au moins un comburant d'appoint peut être du dioxygène O2.

Selon un mode de réalisation, le dit au moins un gaz acide peut comporter au moins un des composés incluant le dioxyde de carbone CO₂.

Selon un mode de réalisation, la solution absorbante riche en composés acides et la solution absorbante pauvre en composés acides peuvent être deux états d'un solvant identiques comprenant une solution d'amine avec des composés réactifs en solution aqueuse, lesdites deux solutions contenant plus ou moins de composés acides.

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre un schéma de combustion selon l'état de l'art.
La figure 2 illustre un schéma de combustion selon un exemple comparatif.
La figure 3 illustre un schéma de combustion selon un mode de réalisation de l'invention.

### Description des modes de réalisation

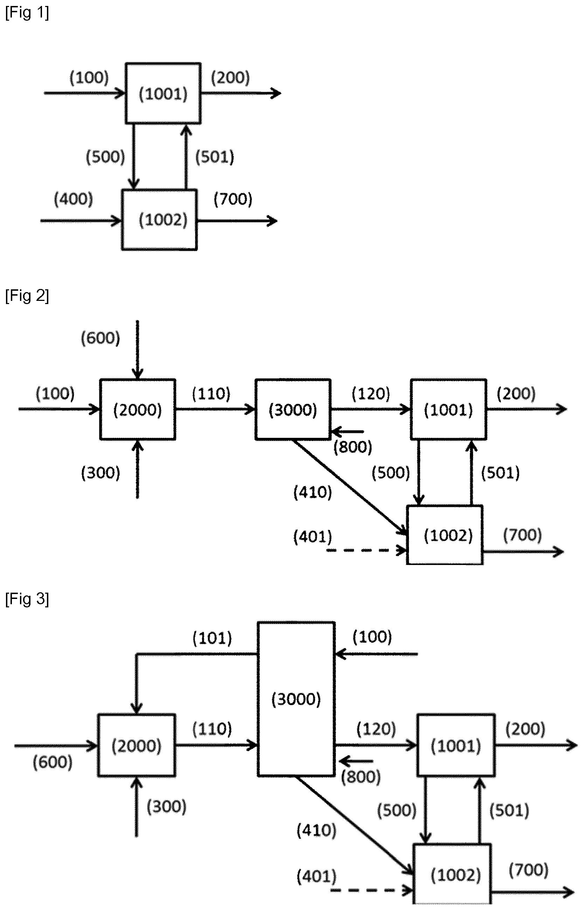

La figure 1 présente un schéma d'un procédé de séparation d'au moins un gaz acide contenu dans un effluent gazeux selon l'état de l'art. On considère un effluent gazeux d'entrée de combustion industrielle (par exemple de la fumée, gaz industriel, etc.) (100) pouvant contenir de l'oxygène sous forme de dioxygène (O₂). L'O₂ peut être présent dans la fumée ou gaz industriel car pendant la combustion industrielle il peut être en excès pour assurer à la fois la complétion de la combustion industrielle et le contrôle de la température. L'oxygène peut aussi provenir de fuite de l'air ambiant vers la ligne de fumées dans la mesure où les dispositifs de combustion sont généralement opérés en dépression pour des raisons de sécurité vis-à-vis de leur environnement. Cet effluent de combustion peut provenir de la combustion de matières carbonées fossiles, de synthèse ou naturelles (transformées ou non). Cet effluent de combustion contient habituellement ainsi une teneur sensible en composés acides (notamment H₂S, mercaptans, CO₂, COS, SO₂, CS₂), par exemple le dioxyde de carbone (CO₂) issu de la combustion. Dans la suite de la description, seul le cas du dioxyde de carbone est décrit, mais le procédé s'applique à tous types de composés acides (par exemple H₂S, mercaptans, CO₂, COS, SO₂, CS₂). Ce CO₂ est absorbé dans l'unité de séparation (1001), appelé également absorbeur. L'effluent pauvre en composés acides (200) issu de l'unité de séparation (1001), est une fumée dont on aura sensiblement abaissé la teneur en CO₂. L'unité de séparation (1001) assure une fonction de séparation du CO₂ par adsorption ou par absorption. Dans le cas d'une séparation du CO₂ à l'aide d'un solvant à base d'amines cet absorbeur est un contacteur gaz/liquide qui met en contact l'effluent gazeux d'entrée à traiter (100) avec une solution absorbante liquide pauvre en composés acides (501), nommée également une solution d'amine. Cette solution d'amine se charge en CO₂ au sein de l'unité de séparation (1001). La solution obtenue est une solution absorbante riche en composés acides (500), riche en CO₂, qui est envoyée dans une colonne de régénération (1002), nommée également régénérateur. La fonction du régénérateur est d'extraire le CO₂ contenu dans l'effluent riche en composés acides (500), pour former une sortie (700) de gaz comprenant le CO₂ extrait. Cette régénération peut être obtenue par effet thermique et abaissement de la pression partielle de CO₂ dans la phase gaz à l'équilibre avec la solution d'amine dans le régénérateur. L'utilité chaude (400) BP (basse pression) ou MP (moyenne pression) peut être utilisée pour procéder à la régénération, par exemple au moyen d'un rebouilleur (non représenté). La solution d'amine régénérée (501) est dite amine pauvre. Elle est envoyée à l'absorbeur (1001) pour capter du CO₂.

L'invention consiste en un procédé de séparation d'au moins un gaz acide contenu dans un effluent d'entrée (100) selon la revendication 1.

Les étapes de mise en contact dans l'unité de séparation (1001) et de régénération peuvent être conformes au procédé selon l'art antérieur, notamment tel que décrit en relation avec la figure 1. Les étapes de combustion et de refroidissement de l'effluent gazeux chaud sont des étapes de désoxydation de l'effluent gazeux d'entrée (100).

La description de la figure 2 décrit, de manière non limitative, le procédé selon un exemple comparatif et incluant plusieurs options de réalisation. Ces options de réalisation peuvent être considérées les uns indépendamment des autres. Dans cette figure, on retrouve un effluent gazeux d'entrée (100), nommé également fumée de combustion, qui est ici traité dans le dispositif de combustion (2000). La fonction du dispositif de combustion (2000) est double. La fonction première de ce dispositif de combustion (2000) est d'abaisser la teneur en O₂ de la fumée (100) de sorte à atteindre une valeur compatible avec l'opération de l'amine choisie pour opérer l'unité de séparation (1001) et la colonne de régénération (1002). La seconde fonction de ce dispositif de combustion (2000) est d'augmenter le contenu énergétique de la fumée de combustion (100) par une élévation sensible de sa température. Ces deux fonctions sont assurées par la combustion d'un combustible ou d'un mélange de combustible (300). Cette charge carbonée peut être la même que celle dont la combustion industriel a conduit à la constitution de l'effluent gazeux d'entrée (100) ou une autre.

Selon un mode de réalisation de l'invention, le combustible (300) peut être un rebus de déchets ou de la biomasse. Ainsi dans un contexte de réduction de l'empreinte environnementale, cette charge pourra être par exemple et de façon non limitative, un déchet industriel ou un rebut de centre de valorisation des déchets ou de la biomasse comme des résidus forestiers, des sousproduits de l'agriculture ou des cultures à vocation énergétiques. Dans ce dernier cas de la biomasse, le fait de réaliser un captage de CO₂ en aval conduit à comptabiliser des émissions négatives et cela est particulièrement favorable en termes de bilan d'émissions de gaz à effet de serre. Un autre carburant pouvant avoir un effet positif sur les émissions est l'hydrogène. En effet, il constitue un carburant à haute valeur énergétique et le produit de sa combustion, l'eau, peut être valorisé directement et séparé simplement des fumées. Par ailleurs, c'est une voie intéressante d'hybridation des procédés entre combustible et électricité, cette dernière pouvant être facilement valorisable en hydrogène au moyen de dispositifs tels que des électrolyseurs. Cette hybridation offre l'avantage d'être flexible selon la quantité d'électricité dé-carbonée disponible sur les réseaux, en excès ou non.

Il résulte de cette combustion un effluent chaud et riche en composés acides (110) dont la teneur en oxygène peut être portée en deçà du seuil recommandé par le fournisseur de solvant à base d'amine soit généralement en dessous de 10% base sèche, et préférentiellement en dessous de 6% base sèche.

En cas de besoin, par exemple un défaut de comburant ne permettant pas d'atteindre par combustion la fourniture de l'énergie requise pour la régénération, selon un mode de réalisation, on peut avoir recours à un appoint d'air (600). En effet, selon un mode de réalisation, on peut contrôler la qualité de l'effluent chaud et riche en composés acides (110) avec l'ajout, dans le dispositif de combustion (2000), d'un moins un comburant d'appoint (600). Selon un mode de réalisation de l'invention, le dit au moins un comburant d'appoint (600) peut être du dioxygène O₂.

Cet effluent chaud et riche en composés acides (110) est refroidi dans un dispositif d'échange de chaleur (3000) de sorte à produire un fluide vapeur haute pression (410), nommé également utilité chaude, à la température et en quantité suffisantes pour régénérer l'amine contenant le CO₂ capté d'une solution absorbante riche en composés acides (500) à partir du fluide sous forme liquide haute pression (800). En effet, selon l'invention, le procédé comprend également une étape qui consiste à introduire un fluide sous forme liquide haute pression (800) dans l'échangeur (3000) dont on retire un fluide sous forme vapeur haute pression (410), qui peut être identifié également sous la dénomination de fluide sous forme vapeur pressurisée. En d'autres termes, au sein de l'échangeur (3000) le fluide sous forme liquide haute pression (800) récupère des calories de l'effluent chaud et riche en composés acides (110) pour former une utilité chaude (410) et un effluent et riche en composés acides (120), qui en sort refroidi.

Selon l'invention, on utilise ledit fluide sous forme de vapeur haute pression (410) comme source d'énergie pour faire fonctionner la colonne de régénération (1002). L'utilisation du fluide sous forme de vapeur haute pression (410) comme source d'énergie pour faire fonctionner la colonne de régénération (1002) est particulièrement utile dans le sens où la condensation de cette vapeur dans le rebouilleur permet de transmettre efficacement la chaleur au procédé. A titre d'exemple non limitatif, ledit fluide sous forme de vapeur haute pression (410) peut être une vapeur saturée dont le point de condensation est défini de l'ordre de 10 à 20 °C au-dessus de la température d'opération du rebouilleur destiné à la régénération de la solution d'amines. Ainsi, dans le cas d'une solution de MEA à 30% pds dans l'eau, on peut avoir typiquement une opération à 120°C soit une vapeur fournie dont le point de condensation est 140°C. L'appoint d'air (600) peut être utilisé (dans la limite de ce qui est acceptable par le dimensionnement de l'unité en termes de débit et de température, en particulier dans le cas d'une adaptation d'un dispositif de captage de CO₂ sur une installation existante) pour augmenter la quantité de combustible pouvant être brûlé pour produire l'effluent chaud et riche en composés acides (110) afin d'augmenter le contenu énergétique du fluide vapeur haute pression (410).

Selon un mode de réalisation, cet apport d'énergie peut aussi être complété par un apport externe d'énergie sous la forme d'un fluide vapeur haute pression d'appoint (401). En effet, selon un mode de réalisation de l'invention, on peut contrôler la qualité du fonctionnement de la colonne de régénération (1002) avec l'ajout d'un fluide complémentaire sous forme vapeur haute pression d'appoint (401).

En effet, le contenu en oxygène de l'effluent gazeux d'entrée (100) n'est pas toujours suffisant pour effectuer la combustion d'une quantité de combustible suffisante pour régénérer la quantité de solvant correspondante à l'ensemble du CO₂ que l'on souhaite capter. A titre d'exemple, c'est typiquement le cas pour un solvant de type MEA des fumées contenant plus de 20% de CO₂ et moins de 5% d'O₂ en base sèche. Cet appoint sous la forme du fluide vapeur haute pression d'appoint (401) peut alors être majoritaire sans que l'on perde le bénéfice d'avoir une contribution énergétique de l'utilité sous la forme du fluide vapeur haute pression (410). D'une façon générale, on veille, lorsque c'est possible à mutualiser au maximum les systèmes de production des utilités chaudes sous la forme du fluide vapeur haute pression (401) et sous la forme du fluide vapeur haute pression (410) de sorte à optimiser le bilan énergétique de l'ensemble, cela peut par exemple correspondre à un réchauffage partiel des fluides utilisés pour produire du fluide vapeur haute pression (401) sur le parcours des fumées entre l'effluent gazeux d'entrée (100) et l'effluent pauvre en composés acides (200) et en particulier dans le dispositif d'échange de chaleur (3000) (non représenté). Dans l'échangeur (3000), la fonction première est, par échange de chaleur sur le flux réchauffé sous la forme de l'effluent chaud et riche en composés acides (110), de produire l'utilité chaude sous la forme du fluide vapeur haute pression (410). On peut aussi trouver dans l'échangeur (3000) des échangeurs de chaleur supplémentaires pour produire un flux sous la forme de l'effluent froid et riche en composés acides (120) dont la température est compatible avec l'opération optimale de l'amine choisie, typiquement en dessous de 50°C pour une solution d'amine MEA à 30% pds dans l'eau.

Selon l'invention, le procédé comprend également une étape qui consiste à réchauffer l'effluent gazeux d'entrée (100) avant de l'introduire, sous forme d'effluent d'entrée chaud (101) dans le dispositif de combustion (2000).

On réchauffe l'effluent gazeux d'entrée (100) en l'introduisant dans un échangeur (3000) dont on le ressort sous forme d'effluent d'entrée chaud (101).

La figure 3 représente un mode de réalisation de l'invention, qui comporte une étape supplémentaire par rapport à l'exemple comparatif de la figure 2, de réchauffement de l'effluent riche en CO₂, effluent gazeux d'entrée (100) dans un échangeur (3000) afin de produire le flux sous la forme de l'effluent gazeux d'entrée chaud (101), dont la température est choisie pour faciliter l'inflammation du combustible (300) au contact de l'oxygène contenu dans l'effluent gazeux d'entrée chaud (101). Typiquement, pour une pression partielle d'oxygène et une concentration d'un combustible déterminé connues, on peut définir un point d'auto inflammation qui peut être un élément permettant de définir la température minimale à atteindre le flux de l'effluent gazeux d'entrée chaud (101) pour atteindre la combustion complète du combustible (300). Cette température minimale peut en outre être abaissée par la mise en œuvre de dispositifs tels que des brûleurs catalytiques. La préchauffe de l'effluent gazeux d'entrée (100) en effluent gazeux d'entrée chaud (101) peut être réalisée par un échange de chaleur avec une utilité chaude dédiée (pas selon l'invention), par intégration thermique avec le dispositif de production de l'utilité chaude d'appoint sous forme de fluide vapeur haute pression d'appoint (401) le cas échéant (pas selon l'invention) ou par intégration en charge effluent autour du dispositif de combustion (2000) comme une zone d'échange de chaleur dédiée du dispositif d'échange de chaleur (3000) tel que représenté sur la figure 3. Au sein de l'échangeur (3000), le fluide sous forme liquide haute pression (800) ainsi que l'effluent gazeux d'entrée récupèrent des calories de l'effluent chaud et riche en composés acides (110) pour former une utilité chaude (410), un effluent gazeux d'entrée chaud (101) et un effluent froid et riche en composés acides (120). Dans d'autres termes, on utilise l'effluent gazeux chaud et riche en composés acides (110) en sortie du dispositif de combustion pour réchauffer l'effluent gazeux d'entrée (100).

Selon un mode de réalisation de l'invention, l'effluent gazeux d'entrée (100) peut être une fumée résultante d'une combustion préalable, notamment issue d'un procédé industriel.

Selon un mode de réalisation de l'invention, l'effluent riche en composés acides (700) peut être stocké dans le sous-sol, en particulier dans des champs pétroliers.

Selon un mode de réalisation de l'invention, le dit au moins un gaz acide peut comporter au moins un des composés incluant le dioxyde de carbone CO₂.

Selon un mode de réalisation de l'invention, la solution absorbante riche en composés acides (500) et la solution absorbante pauvre en composés acides (501) sont deux états d'un solvant identiques comprenant une solution d'amine avec des composés réactifs en solution aqueuse, lesdites deux solutions contenant plus ou moins de composés acides.

Afin d'illustrer la solution proposée, nous nous appuyons sur un procédé d'absorption de CO₂ par lavage aux amines. Les performances considérées sont celles du procédé de lavage à la Monoéthanolamine (MEA) 40% pds pour captage de CO₂ sur une fumée de combustion type de centrale thermique à charbon. Ces performances ont été observées expérimentalement.

Pour chacun des cas présentés, les caractéristiques du courant de fumées à traiter sont les suivantes : Conditions de l'effluent gazeux d'entrée (100)

**[Table 1]**

| Température | °C | 150 |
|---|---|---|
| Pression | atm | 1 |
| Débit volumique base sèche | Nm³/h | 250 000 |

**Cas de référence** : captage de CO₂ sur fumées de combustion selon l'état de l'art, cf. Figure 1.

Par soucis de simplification, l'effluent gazeux d'entrée (100) est considéré comme étant exempt d'impuretés telles que SOx ou NOx. Sa teneur en oxygène est d'environ 5% vol sur base sèche. Les compositions des fumées en sorties de four sont généralement fournies en base sèche. Pour la réalisation de ces exemples nous considérons des fumées hydratées à hauteur de 0,043 kg H₂O/kg gaz sec (valeur récupérée sur une fumée de combustion type de centrale thermique à charbon). Sa composition est la suivante :
Composition fumées 5% vol de O₂

**[Table 2]**

| Composé | base sèche | | | base humide | |
|---|---|---|---|---|---|
| | % vol dry gas | Débit (Nm3/h) | Débit (kg/h) | Débit (kg/h) | % pds |
| CO2 | 14,12 | 3,53E+04 | 7,06E+04 | 7,06E+04 | 32,30 |
| N2 | 80,75 | 2,02E+05 | 1,28E+05 | 1,28E+05 | 58,78 |
| O2 | 5,13 | 1,28E+04 | 1,05E+04 | 1,05E+04 | 4,80 |
| H20 | 0 | 0 | 0 | 9,01 E+03 | 4,12 |
| Total | 100 | 2,50E+05 | 2,10E+05 | 2,19E+05 | 100 |

L'absorbeur de CO₂ par lavage à la M EA 40% pds se trouvant dans l'unité de séparation (1001) permet d'obtenir un effluent pauvre en composés acides (200) présentant 90% pds de CO₂ en moins. Sa composition est présentée dans le tableau suivant :
Composition de la fumée après captage de CO₂ à la MEA 40%pds

**[Table 3]**

| Composé | Composition fumée traitée | |
|---|---|---|
| | Débit (kg/h) | % pds |
| CO₂ | 7,06E+03 | 4,55 |
| N₂ | 1,28E+05 | 82,87 |
| O2 | 1,05E+04 | 6,77 |
| H₂0 | 9,01 E+03 | 5,81 |
| Total | 1,55E+05 | 100 |

La colonne de régénération (1002) requiert une énergie de régénération de 3,02 GJ/t_{CO2 capté}. Dans la figure 1 le courant vapeur de l'utilité chaude (400) rentre dans la colonne de régénération (1002). Ce cas de base connu dans l'art de la technique ne précise pas comment la vapeur est formée mais explicite la quantité de vapeur nécessaire pour capter 90% du CO2 dans l'effluent gazeux d'entrée. Le débit de vapeur nécessaire comme utilité chaude (400) pour le rebouillage du solvant pour capter 90% pds de CO₂ par captage à la MEA 40% pds est indiqué dans le tableau suivant :
Caractéristiques du captage de CO₂ par la MEA 40% pds

**[Table 4]**

| | | |
|---|---|---|
| Débit effluent gazeux d'entrée (100) | kg/h | 2,19E+05 |
| Dont débit CO₂ | kg/h | 7,06E+04 |
| Débit CO₂ capté (90% pds) | kg/h | 6,36E+04 |
| Energie nécessaire à la régénération | GJ/t_{CO2 capté} | 3,02 |
| Energie nécessaire à la régénération | kJ/h | 1,92E+08 |
| Débit utilité chaude (400) | kg/h | 8,86E+04 |

**Cas selon un mode de réalisation de l'invention :** contrôle de la teneur en oxygène d'un effluent gazeux d'entrée (100) contenant du CO₂ et fourniture d'énergie, avec préchauffe de l'effluent à traiter, conformément au mode de réalisation de la Figure 3.

Les performances du dispositif sont comparées sur 3 cas avec un effluent gazeux d'entrée (100) ayant une teneur en oxygène base sèche de 5% vol (même composition que la fumée du cas de référence), 10% vol et 15% vol. Les compositions des fumées considérées sont les suivantes :
Composition de la fumée - 3 teneurs en O₂ testées

**[Table 5]**

| Composé | Cas 5% vol O₂ | | Cas 10% vol O₂ | | Cas 15% vol O₂ | |
|---|---|---|---|---|---|---|
| | Débit (kg/h) | % pds (humide) | Débit (kg/h) | % pds (humide) | Débit (kg/h) | % pds (humide) |
| CO₂ | 7,06E+04 | 32,30 | 7,06E+04 | 31,96 | 7,06E+04 | 31,64 |
| N₂ | 1,28E+05 | 58,78 | 1,21 E+05 | 54,65 | 1,13E+05 | 50,53 |
| O2 | **1,05E+04** | **4,80** | **2,05E+04** | **9,26** | **3,07E+04** | **13,75** |
| H₂0 | 9,01E+03 | 4,12 | 9,11E+03 | 4,12 | 9,11E+03 | 4,08 |
| Total | 2,19E+05 | 100 | 2,21E+05 | 100 | 2,23E+05 | 100 |

Le combustible (300) utilisé dans le dispositif est du méthane à 7 bar et 25 °C et présentant un PCI de 5,003.10⁴ kJ/kg. La combustion complète avec excès d'oxygène se déroule jusqu'à ce que la teneur en oxygène atteigne la valeur de 2% vol dans le courant de fumée en sortie du dispositif de combustion (2000). La teneur cible en oxygène est variable mais cherche à être minimisée de manière à obtenir un courant de fumée dont la teneur en oxygène ne provoque pas une dégradation trop importante de l'amine dans l'unité de séparation (1001).

Plus la teneur en oxygène choisie est faible, plus la quantité d'énergie à récupérer pour la production de vapeur sera importante, mais cela impacte également la quantité de combustible à consommer. Cette valeur peut donc être optimisée.

Tout d'abord l'effluent gazeux d'entrée (100), qui se trouve initialement à 150°C, est chauffé jusqu'à 650°C dans un dispositif d'échange de chaleur (3000) utilisant l'effluent chaud et riche en composés acides (110) en sortie du dispositif de combustion (2000) comme fluide chaud.

La température de 650°C est supérieure à la température d'ignition du combustible (300), ici du méthane, qui est de 540°C. Ceci assure la combustion du combustible avec la fumée à traiter. Les températures observées pour les différents cas sont présentées dans le tableau suivant. Plus la teneur en oxygène dans la fumée d'entrée est importante, plus il va y avoir de combustion dans le dispositif, donc une température de sortie élevée.

Températures autour du dispositif d'échange de chaleur (3000)

**[Table 6]**

| Courant | | n° référence | Température | | |
|---|---|---|---|---|---|
| | | | Cas 5% vol O₂ | Cas 10% vol O₂ | Cas 15% vol O₂ |
| Préchauff e de la fumée | Entrée froide | 100 | 150 | 150 | 150 |
| | Sortie froide | 101 | 650 | 650 | 650 |
| | Entrée chaude | 110 | 906,8 | 1286 | 1621 |
| | Sortie chaude | Non représenté | 448 | 872,9 | 1243 |
| Récupérati on de chaleur, vaporisatio n | Entrée chaude | Non représenté | 448 | 872,9 | 1243 |
| | Sortie chaude | 120 | 150 | 150 | 150 |
| | Boiling Feed Water | 800 | 140 | 140 | 140 |
| | Vapeur 3,6 bar | 410 | 140 | 140 | 140 |

Le courant de fumée en sortie du dispositif de combustion (2000) qui a permis de préchauffer la fumée à traiter permet ensuite de produire de la vapeur d'eau par vaporisation de « boiling feed water » à 140°C et 3,6 bar (conditions de vapeur nécessaires pour la vapeur requise pour faire fonctionner le régénérateur avec du solvant MEA 40% pds). Ce courant de vapeur est ensuite utilisé comme utilité chaude, fluide vapeur haute pression (410) par la colonne de régénération (1002). La quantité de vapeur produite est rapportée à la quantité d'énergie nécessaire pour la régénération du solvant MEA de 3,02 GJ/t CO₂ capté, elle-même liée à la quantité de CO₂ qu'il est possible de capter par l'absorption dans l'unité de séparation (1001). Les performances obtenues dans les 3 cas sont présentées dans le tableau suivant :
Performances du dispositif selon les 3 cas

**[Table 7]**

| | | Cas 5% vol O₂ | Cas 10% vol O₂ | Cas 15% vol O₂ |
|---|---|---|---|---|
| Débit vapeur (410) générée | kg/h | 3,40E+04 | 9,08E+04 | 1,49E+05 |
| Energie disponible | kJ/h | 7,37E+07 | 1,97E+08 | 3,22E+08 |
| Energie pour la régénération | GJ/t CO₂ capté | 3,02 | | |
| Débit CO₂ capté dans l'unité de séparation (1001) | kg/h | 2,44E+04 | 6,51 E+04 | 1,07E+05 |
| Débit de CO₂ total | kg/h | 7,47E+04 | 8,15E+04 | 8,84E+04 |
| Débit de CO₂ évité | kg/h | 2,03E+04 | 5,43E+04 | 8,88E+04 |
| **Taux de captage possible CO₂** | **%** | **32,69%** | **79,94%** | **120,56%** |
| **Taux de CO₂ évité** | **%** | **28,80%** | **76,85%** | **125,74%** |

| | | | | |
|---|---|---|---|---|
| Note : le taux de captage de CO₂ prend en compte le CO₂ supplémentaire généré par la combustion dans le dispositif de combustion (2000). On parle de taux de CO₂ évité quand on considère la quantité de CO₂ finalement émise (après dispositif de combustion et unité de captage de CO₂) comparée à la quantité de CO₂ qui aurait été émise initialement sans aucune unité de captage. | | | | |

Plus la teneur en oxygène dans le courant de fumée à traiter est élevée, plus la quantité de vapeur produite, selon l'invention, par récupération de chaleur sur les fumées sera élevée, donc par suite plus le taux de captage de CO₂ est important grâce au procédé selon l'invention.

## Revendications

1. Procédé de séparation d'au moins un gaz acide contenu dans un effluent gazeux d'entrée (100) comprenant au moins les étapes suivantes :
- On met en contact, dans une unité de séparation (1001), un effluent gazeux froid et riche en composés acides (120) avec une solution absorbante comportant des amines en solution aqueuse, pauvre en composés acides (501) de manière à obtenir un effluent gazeux pauvre en composés acides (200) et une solution absorbante riche en composés acides (500),
- On régénère au moins une fraction de la solution absorbante riche en composés acides (500) dans une colonne de régénération (1002) de manière à obtenir une solution absorbante pauvre en composés acides (501) et un effluent riche en composés acides (700), ladite solution absorbante pauvre en composés acides (501) étant utilisée dans l'étape de mise en contact avec ledit effluent froid et riche en composés acides (120),
**Caractérisé en ce que** le procédé de séparation comporte en outre les étapes suivantes :
- On réalise une combustion, dans un dispositif de combustion (2000), de l'effluent gazeux d'entrée (100) avec un combustible (300), de manière à obtenir un effluent gazeux chaud et riche en composés acides (110),
- On refroidit l'effluent gazeux chaud et riche en composés acides (110) dans un échangeur (3000) et on obtient l'effluent froid et riche en composés acides (120) utilisé dans l'étape de mise en contact avec une solution absorbante pauvre en composés acides (501),
le procédé comprenant également :
- une étape qui consiste à introduire un fluide sous forme liquide haute pression (800) dans l'échangeur (3000) dont on retire un fluide sous forme vapeur haute pression (410) et on utilise ledit fluide sous forme de vapeur haute pression (410) comme source d'énergie pour faire fonctionner la colonne de régénération (1002), et
- une étape qui consiste à réchauffer l'effluent gazeux d'entrée (100) avant de l'introduire, sous forme d'effluent gazeux d'entrée chaud (101) dans le dispositif de combustion (2000), et dans lequel on réchauffe l'effluent gazeux d'entrée (100) en l'introduisant dans l'échangeur (3000) dont on le ressort sous forme d'effluent gazeux d'entrée chaud (101).

2. Procédé selon la revendication 1, dans lequel on contrôle la qualité de l'effluent chaud et riche en composés acides (110) avec l'ajout, dans le dispositif de combustion (2000), d'un moins un comburant d'appoint (600).

3. Procédé selon l'une des revendications précédentes, dans lequel on contrôle la qualité du fonctionnement de la colonne de régénération (1002) avec l'ajout d'un fluide complémentaire sous forme vapeur haute pression d'appoint (401).

4. Procédé selon l'une des revendications précédentes, dans lequel l'effluent gazeux d'entrée (100) est une fumée résultante d'une combustion préalable, notamment issue d'un procédé industriel.

5. Procédé selon l'une des revendications précédentes, dans lequel l'effluent riche en composés acides (700) est stocké dans le sous-sol, en particulier dans des champs pétroliers.

6. Procédé selon l'une des revendications précédentes, dans lequel le combustible (300) est un rebus de déchets ou de la biomasse.

7. Procédé selon l'une des revendications 2 à 6, dans lequel le dit au moins un comburant d'appoint (600) est du dioxygène O₂.

8. Procédé selon l'une des revendications précédentes, dans lequel le dit au moins un gaz acide comporte au moins un des composés incluant le dioxyde de carbone CO₂.

## Patentansprüche

1. Verfahren zur Abtrennung mindestens eines sauren Gases, das in einem zugeführten Abgas (100) enthalten ist, das zumindest die folgenden Schritte umfasst:
- das In-Kontakt-Bringen in einer Trenneinheit (1001) eines kalten und an sauren Verbindungen reichen Abgases (120) mit einer an sauren Verbindungen armen Absorptionslösung (501), die Amine in einer wässrigen Lösung umfasst, um ein an sauren Verbindungen armes Abgas (200) und eine an sauren Verbindungen reiche Absorptionslösung (500) zu erhalten,
- das Regenerieren zumindest eines Teils der an sauren Verbindungen reichen Absorptionslösung (500) in einer Regenerationskolonne (1002), um eine an sauren Verbindungen arme Absorptionslösung (501) und einen an sauren Verbindungen reichen Ablauf (700) zu erhalten, wobei die an sauren Verbindungen arme Absorptionslösung (501) in dem Schritt des In-Kontakt-Bringens mit dem kalten und an sauren Verbindungen reichen Ablauf (120) verwendet wird,
**dadurch gekennzeichnet, dass** das Abtrennverfahren außerdem die folgenden Schritte umfasst:
- das Durchführen einer Verbrennung des zugeführten Abgases (100) mit einem Brennstoff (300) in einer Verbrennungsvorrichtung (2000), um ein warmes und an sauren Verbindungen reiches Abgas (110) zu erhalten,
- das Abkühlen des warmen und an sauren Verbindungen reichen Abgases (110) in einem Austauscher (3000) und das Erhalten eines kalten und an sauren Verbindungen reichen Ablaufs (120), der im Schritt des In-Kontakt-Bringens mit einer an sauren Verbindungen armen Absorptionslösung (501) verwendet wird,
wobei das Verfahren auch umfasst:
- einen Schritt, der aus dem Einführen eines Fluids (800) in Form einer Hochdruckflüssigkeit in den Austauscher (3000) besteht, aus dem ein Fluid (410) in Form eines Hochdruckdampfes abgeleitet wird, und das Fluid (410) in Form eines Hochdruckdampfes als Energiequelle für den Betrieb der Regenerationskolonne (1002) verwendet wird, und
- einen Schritt, der aus dem Erwärmen des zugeführten Abgases (100) vor dessen Einführung in Form eines warmen zugeführten Abgases (101) in die Verbrennungsvorrichtung (2000) besteht, und wobei das zugeführte Abgas (100) erwärmt wird, indem es in den Austauscher (3000) eingeführt wird, aus dem es in Form eines warmen zugeführten Abgases (101) entnommen wird.

2. Verfahren nach Anspruch 1, wobei die Qualität des warmen und an sauren Verbindungen reichen Ablaufs (110) durch die Zugabe mindestens eines zusätzlichen Oxidationsmittels (600) in die Verbrennungsvorrichtung (2000) gesteuert wird.

3. Verfahren nach einem der vorhergehenden Ansprüche, wobei die Qualität des Betriebs der Regenerationskolonne (1002) durch die Zugabe eines Ergänzungsfluids (401) in Form eines zusätzlichen Hochdruckdampfes gesteuert wird.

4. Verfahren nach einem der vorhergehenden Ansprüche, wobei das zugeführte Abgas (100) ein Rauchgas aus einer vorherigen Verbrennung, insbesondere aus einem industriellen Verfahren, ist.

5. Verfahren nach einem der vorhergehenden Ansprüche, wobei der an sauren Verbindungen reiche Ablauf (700) unterirdisch, insbesondere in Erdölfeldern, gelagert wird.

6. Verfahren nach einem der vorhergehenden Ansprüche, wobei es sich beim Brennstoff (300) um entsorgte Abfälle oder Biomasse handelt.

7. Verfahren nach einem der Ansprüche 2 bis 6, wobei es sich bei dem mindestens einen zusätzlichen Oxidationsmittel (600) um Disauerstoff, O₂, handelt.

8. Verfahren nach einem der vorhergehenden Ansprüche, wobei das mindestens eine saure Gas mindestens eine von Kohlendioxid, CO₂, einschließenden Verbindungen umfasst.

## Claims

1. Process for separating at least one acidic gas contained in an incoming gaseous effluent (100), comprising at least the following steps:
- contacting, in a separation unit (1001), a cold gaseous effluent rich in acidic compounds (120) with an absorbent solution comprising amines in aqueous solution and low in acidic compounds (501) so as to obtain a gaseous effluent low in acidic compounds (200) and an absorbent solution rich in acidic compounds (500),
- regenerating at least a fraction of the absorbent solution rich in acidic compounds (500) in a regeneration column (1002) so as to obtain an absorbent solution low in acidic compounds (501) and an effluent rich in acidic compounds (700), said absorbent solution low in acidic compounds (501) being used in the step of contacting with said cold effluent rich in acidic compounds (120),
**characterized in that** the separation process further comprises the following steps:
- burning, in a combustion device (2000), the incoming gaseous effluent (100) with a fuel (300), so as to obtain a hot gaseous effluent rich in acidic compounds (110),
- cooling the hot gaseous effluent rich in acidic compounds (110) in an exchanger (3000) to give the cold effluent rich in acidic compounds (120) used in the step of contacting with an absorbent solution low in acidic compounds (501),
the process also comprising:
- a step of introducing a fluid in high-pressure liquid form (800) into the exchanger (3000), from which a fluid in high-pressure vapour form (410) is withdrawn, and said fluid in high-pressure vapour form (410) is used as an energy source for operating the regeneration column (1002), and
- a step of reheating the incoming gaseous effluent (100) before introducing it, in hot incoming gaseous effluent form (101), into the combustion device (2000), and in which the incoming gaseous effluent (100) is reheated by introducing it into the exchanger (3000), from which it is taken out in hot incoming gaseous effluent form (101).

2. Process according to Claim 1, in which the quality of the hot effluent rich in acidic compounds (110) is controlled with the addition, to the combustion device (2000), of at least one supplementary oxidizer (600).

3. Process according to any of the preceding claims, in which the quality of the operation of the regeneration column (1002) is controlled with the addition of a complementary fluid in supplementary high-pressure vapour form (401).

4. Process according to any of the preceding claims, in which the incoming gaseous effluent (100) is a flue gas from a previous combustion, obtained in particular from an industrial process.

5. Process according to any of the preceding claims, in which the effluent rich in acidic compounds (700) is stored underground, more particularly in oilfields.

6. Process according to any of the preceding claims, in which the fuel (300) is a discard from waste or from biomass.

7. Process according to any of Claims 2 to 6, in which said at least one supplementary oxidizer (600) is dioxygen O₂.

8. Process according to any of the preceding claims, in which said at least one acidic gas comprises at least one of the compounds including carbon dioxide CO₂.
